# EUROPEAN PATENT SPECIFICATION

(11) **EP 0 495 551 B1**
(45) Date of publication and mention of the grant of the patent: **02.04.1997**
(21) Application number: 92200078.1
(22) Date of filing: 13.01.1992
(51) Int. Cl.: C08F 283/06, C08G 18/63

(54) **Polyether polyols containing polymer dispersions for polyurethane foams and/or polyisocyanurate foams**
Polymer-Dispersionen enthaltende Polyetherpolyole für Polyurethan-Schaumstoffe und/oder Polyisocyanurat-Schaumstoffe
Polyétherpolyols contenant des dispersions de polymères pour des mousses de polyuréthane et/ou de polyisocyanurate

(30) Priority: 17.01.1991 GB 9100988
(43) Date of publication of application: 22.07.1992
(73) Proprietor: SHELL INTERNATIONALE RESEARCH MAATSCHAPPIJ B.V., 2596 HR Den Haag (NL)
(72) Inventor: Corbett, Gerald Ernest, NL-1031 CM Amsterdam (NL); Van Elderen-van Dusseldorp, Els, NL-1031 CM Amsterdam (NL); Van Kempen, Ronald, NL-1031 CM Amsterdam (NL)

(56) References cited:
- EP-A- 0 076 491
- EP-A- 0 162 588
- EP-A- 0 343 907

## Description

The present invention relates to a process for preparing polyol compositions containing polymer dispersions, especially polystyrene or analogous polyvinylene polymer dispersions suitable for preparing polyurethane and/or polyisocyanurate products, including foams, as well as to polyol compositions containing polymer dispersions prepared according to said process.

Dispersions of solid polymer in a polyol, also referred to in the art as polymer/polyols (J. of Cellular Plastics, pp. 84-96, March 1966) are used inter alia for the production of special grades of polymer foams, in particular polyurethane foams, especially high resilience foams. There is therefore a lively interest in polyol compositions containing polymer dispersions.

In general polymer/polyols are prepared by polymerising one or more olefinically unsaturated monomers in the presence of a suitable polyether polyol using a free radical initiator to catalyse the reaction.

Conventionally acrylonitrile or acrylonitrile/styrene mixtures are used as the monomer(s) and azobis(isobutyronitrile) as the free radical catalyst. Styrene alone can only be used with an additional component to stabilise the resulting dispersion; without stabilisation the styrene polymerises freely producing a polymeric mass and not a dispersion of discrete particles. In conventional proposals acrylonitrile as comonomer is thought to provide the stabilising effect.

A high content of acrylonitrile in the polymer/polyol and in the resultant foam is undesirable in certain applications because it can lead to scorching of the foam. Low acrylonitrile-to-styrene ratios are therefore desirable but difficult to achieve and still maintain a stable polymer/polyol dispersion. The maximum content in the polymer of polystyrene achievable using acrylonitrile as stabiliser-comonomer is understood in the art to be 80% by weight.

Proposals have been made to incorporate a stabiliser during polymerisation, see for example the non-aqueous dispersant stabiliser described in EP-B-162 588. EP-A-063 832 suggests modifying a specific initiator to achieve stable dispersion. In both documents preparation of stable 100% polystyrene polymer/polyols has been described and demonstrated.

In European Patent Specification No. 076 491 A, it is proposed to use a polyisocyanate-coupled polyol to prepare a stable acrylonitrile-based polymer polyol, and a normally liquid, stable polymer/polyol composition is claimed, which composition is formed by polymerising, in the presence of a free radical catalyst, (1) from about 10 to about 50 weight percent of a mixture of acrylonitrile and an ethylenically unsaturated comonomer or comonomers in a weight ratio, respectively, of from about 80:20 to about 20:80, dissolved or dispersed in (2) from about 50 to about 90 weight percent of a polyol mixture comprising (a) a base polyol having a number average molecular weight of at least 500 and (b) a coupled polyol consisting essentially of the reaction product of a polyol having a functionality in excess of 2 reacted with a polyisocyanate in such proportion that the ratio of hydroxyl groups to isocyanato groups is greater than 1, the coupled polyol being present in an amount sufficient to stabilise the resulting polymer/polyol. Sufficient stability in this respect reflects the ability to be processed in commercial production equipment without the necessity of additional mixing to ensure homogeneity. According to said application, the coupled polyol may be made either in situ in the base polyol (by adding the requisite amount of the polyisocyanate to form the desired level of coupled polyol), or separately and then blended with the base polyol. The latter technique allows synthesis of higher molecular weight coupled polyols, which tend to be more effective in conferring stability to the polymer/polyol; however, then a penalty of increased viscosity will be incurred.

It is desirable for reasons of costs, colour of the polymer/polyol, and the properties of the prepared foams (scorching) to minimise the level of acrylonitrile, and maximise the level of the comonomer, eg., styrene. However, in line with conventional understanding, the above-mentioned application is restricted to polymer/polyols wherein the polymer component may comprise at least 20%, by weight, of acrylonitrile.

Indeed, it has been found that the use of AIBN [azobis(isobutyronitrile)], the preferred catalyst according to the above-mentioned application, following either the in-situ technique or the blend method of EP-A-076 491, did not result in stable, polystyrene/polyols of fully acceptable properties; the particle size of the polystyrene particles when polymerising pure styrene was quite large, leading to settling of the particles upon storing, and making the polymer/polyols less suitable for applications such as open cell foams. To obtain polymer/polyols with a higher polystyrene content by this method, one must assume that it is necessary to include a further stabiliser as suggested in the prior art.

It is an object of the present invention to provide a stable, preferably low viscosity, polymer/polyol composition, wherein the polymer component is of low particle size and is essentially a homopolymer of styrene, or a homo- or copolymer of a structurally related vinyl aromatic monomer, without the need for additional dispersant stabilisers.

Surprisingly, it has been found that by using a peroxide catalyst as the free radical initiator and utilising the method of EP-A-076 491 in which a coupled polyol is first prepared and then blended with a base polyol, it is possible to obtain a stable 100% polystyrene polymer/polyol dispersion of low polymer particle size without the need for any additional dispersant stabiliser or initiator modification.

European Patent Specification EP-A-0 343 907 provides a process for the preparation of a high styrene content polymer/polyol where the base polyol is an epoxy resin-modified polyol. While the polymerisation initiators are disclosed as including peroxides in general, when the epoxy-resin based polyols were used, the only catalyst which was shown to be operable was the 2,2'-azo-bis-isobutynitrile. Examples 9 and 10 show that when the styrene content was essentially 100%, the resultant particle sizes were completely unsatisfactory, i.e. greater than 3.

The present invention provides a process for preparing a stable, polymer/polyol composition, which composition is formed by polymerising, in the presence of a free radical initiator, (1) from 10 to 50 weight percent of one or more ethylenically unsaturated monomers, dissolved or dispersed in (2) from 50 to 90 weight percent of a polyol mixture comprising (a) a base polyol (B) having a number average molecular weight of at least 500 and (b) a coupled polyol consisting essentially of the reaction product of a base polyol (A) having a functionality of at least 2 reacted with a polyisocyanate in such proportion that the ratio of hydroxyl groups to isocyanate groups is greater than 1, the coupled polyol being present in an amount sufficient to stabilise the resulting polymer/polyol, characterised in that (I) the monomer or monomer mixture comprises in excess of 80% by weight of styrene or a structurally related vinyl aromatic and is polymerised in the presence of (II) a peroxide free radical initiator, dissolved or dispersed in (III) a polyol mixture prepared by first producing the coupled polyol separately, and then blending it with the base polyol (B).

It was found that when producing polystyrene/polyols, the "in-situ" technique propagated in the above-mentioned EP-A-076 491 results in either a stable, but then highly viscous polystyrene/polyol, or in an unstable polystyrene/polyol.

The coupled polyol is produced by charging one or more polyisocyanates to one or more base polyols (A). Both base polyols (A) and (B) are compounds having, on average, at least 2 aliphatic hydroxyl groups. Very suitable polyols are polyalkylene polyether polyols, usually called polyether polyols, typically made by the reaction of a starting compound having a plurality of reactive hydrogen atoms with one or more alkylene oxides selected from ethylene oxide, propylene oxide, butylene oxide or mixtures of these oxides. Suitably, the base polyol (A) is similar to, or identical with base polyol (B).

The structurally related vinyl aromatic monomer or comonomer is suitably a substituted styrene molecule, for example alpha methyl styrene, a halo styrene, cyanostyrene or nitrostyrene. Preferably the styrene and/or related aromatic compound forms 100% by weight of the monomer(s) used in the process.

The polyisocyanate employed in the preparation of the coupled polyol is not critical. Suitably, a toluene diisocyanate (TDI), 4,4'-diphenylmethane diisocyanate (MDI) and/or polymethylene polyphenylene polyisocyanate may be used.

The relative amount of organic polyisocyanate and base polyol (A) needed to prepare the coupled polyol depends inter alia on the degree of functionality of the polyol (A) and the degree of functionality of the isocyanate.

Preferably the coupled polyol is prepared by reacting one or more base polyols (A) with one or more organic polyisocyanates in a relative amount, expressed in the ratio of equivalents hydroxyl groups of both base polyols (A) and (B) over equivalents isocyanate groups, in the range of from 1 to 100; more preferably by first reacting said one or more base polyols (A) with said one or more organic polyisocyanates at an initial ratio of more than the ratio at which gelation occurs (1 in case of a diisocyanate and a difunctional polyol), whereafter sufficient base polyol (B) is added to achieve a final, predetermined ratio.

When employing a trifunctional polyol or polyol mixture as base polyol (A) and a difunctional organic polyisocyanate or polyisocyanate mixture, preferably said initial ratio lies in the range of from 2.1 to 10.0, especially as near 2.1 as possible.

According to a preferred embodiment, a catalyst is used in the preparation process of the coupled polyol. The catalyst may be any catalyst conventionally used for such a purpose. Suitably, triethylamine is used. Usually, the amount of catalyst employed is in the range of from 0.01 to 5.0 pbw based on 100 pbw of the polyol.

The preparation of the coupled polyol is suitably carried out by charging one or more organic polyisocyanates to one or more base polyols (A) in the presence of one or more catalysts at a reaction temperature in the range of from 0 to 100°C. Said preparation may be carried out by a continuous process or batch-wise.

The polymer component of the polymer/polyol is produced by polymerisation of styrene and/or structurally related vinyl aromatics in the liquid polyol mixture comprising the coupled polyol. In addition, the monomer feed may contain small amounts (less than 20% by weight) of other polymerisable vinyl compounds, such as for instance acrylonitrile though this is not necessary to maintain stability.

The final polymer/polyol is suitably one having a solids content, i.e. the content of dispersed polymer, of between 10 and 50 % by weight, more suitably between 20 and 40 % by weight, based on the polymer/polyol.

It is often preferred to dilute the prepared polymer/polyol subsequent to preparation in order to achieve a lower viscosity dispersion. Indeed good results can be achieved by preparing a high solids content polymer/polyol (of the order of 30 to 50% by weight) and then blending the polymer/polyol with additional base polyol (B) to obtain a lower solids content (of the order of 20% by weight) dispersion of low viscosity.

The polymerisation reaction carried out during the preparation of the polymer/polyol is initiated by means of a free radical initiator which is a peroxide and preferably selected from t-alkyl, preferably t-C₄₋₁₀ alkyl, especially t-C₅₋₈alkyl, peroxyesters and peroxyethers. Peroxides containing an aromatic, eg. benzoyl, group although giving a usefully low particle size are less preferred, since the use thereof results in a higher viscosity dispersion than is normally desired. More preferably said initiator is a di-t-alkylperoxide and/or a t-alkylperoxycarboxylate. T-amylperoxy-2-ethylhexanoate, also termed the 1,1-dimethyl propyl ester of 2-ethylhexaneperoxoic acid, is most preferred. The amount of free radical initiator suitably lies in the range of from 0.01 % by weight to 5 % by weight of the total polyol-monomer starting materials.

The polymerisation of the vinyl monomer feed is normally carried out at a temperature in the range of from 60 to 160°C, preferably from 80 to 130°C. The polymerisation of the vinyl monomer(s) may also be carried out either at a continuously increasing temperature according to a predetermined temperature programme or using two or more constant temperature steps.

Moreover, the polymerisation may be carried out by heating a mixture of vinyl monomer(s) and initiator dissolved in the polyol mixture, or, and more preferably, by continuous addition of said vinyl monomer(s) and initiator to a preheated polyol mixture.

The polymer/polyols produced in accordance with the present invention are useful in the preparation of various polyurethane and/or polyisocyanurate articles, particularly polyurethane and polyisocyanurate foams, which preparation may be carried out batch-wise or continuously. Furthermore, the polymer/polyols prepared in accordance with the present invention may also be used in casting systems (without use of blowing agents), coating systems, adhesive systems and other systems using conventional (polyether) polyols.

The invention is now illustrated by the following Examples. All parts are by weight unless otherwise designated. In the Examples below, the following compounds (trademarks denoted *) are used:-
- Caradol*36-3: a polyoxyalkylene triol having an OH value of 36 mg KOH/g, sold by Shell; number average molecular weight of the order of 4000, functionality:3.
- Desmodur*44MS: 4,4'-diphenylmethane diisocyanate (MDI), sold by Bayer, functionality:2.
- Luperox*101: 2,5-dimethyl-2,5-bis(t-butylperoxy)hexane, sold by Luperox
- Luperox*575: t-amylperoxy-2-ethylhexanoate (1,1-dimethylpropyl ester of 2-ethylhexaneperoxoic acid), sold by Luperox
- Luperox*PA: t-amylperoxybenzoate (1,1-dimethylpropyl ester of benzene peroxoic acid sold by Luperox
- Lucidol*50: dibenzoylperoxide, sold by AKZO Chemie
- Trigonox*B: di-t-butylperoxide sold by AKZO Chemie
- Trigonox*C: t-butylperoxybenzoate, sold by AKZO Chemie
- AIBN: azobis(isobutyronitrile), sold by Aldrich
- TMPH: 2,4,4-trimethylpentyl-2-hydroperoxide, sold by AKZO Chemie
- TEA: triethylamine, sold by Baker

The properties of the polymer/polyols and were determined according to the following procedures:
- Viscosity: in mPa.s at 25°C using a Brookfield viscometer
- Average particle size: in µm by image analysis (microscopic image, magnification 400x) unless otherwise indicated

### Example 1

### I Preparation of coupled polyol

Caradol 36-3 (C36-3; 5 kg) was added to a reactor with heater and stirrer. Desmodur 44MS (MDI; 395.8 g) was added followed by a further portion of Caradol 36-3 (5.55 kg) and as catalyst, triethylamine (TEA; 10.5 g). The mixture was stirred and heated to 50°C, and maintained at that temperature for 5 hours. The product had a viscosity of 57370 mPa.s at 25°C, and a hydroxyl value of 22.4 mg KOH/g.

### II Preparation of polymer/polyol

C36-3 (144 kg) and coupled polyol (16 kg) made according to the recipe above were added to a reactor fitted with heater and stirrer. The mixture was stirred, purged with nitrogen and heated to 80°C. Styrene (40 kg) and Luperox 575 (2.58 kg) were added during 2 hours. The reactor was maintained at 80°C for a further 2 hours, and then held under vacuum for 5 hours to remove volatile components. The product was a white dispersion (20% polymer), with viscosity 3580 mPa.s at 25°C, and an average particle size of 1.3 µm (micron).

### Example 2

### I Preparation of coupled polyol

C36-3 was added to a reactor with heater and stirrer, and MDI (77 mmol/kg polyol) and catalyst (TEA; 0.1% on polyol) were added to the polyol. The mixture was stirred and heated to 50°C and maintained at that temperature for 5 hours, whereafter the reactor was cooled. The coupled polyol, was transferred to a container which had been previously flushed with nitrogen.

### II The preparation of the polymer/polyol

400 g of C36-3 and 400 g of coupled polyol, prepared according to the general procedure in Example 2I above, were placed in a reactor at 20°C, and flushed with nitrogen for 0.5 hour. 200 g of styrene was added, followed by the prescribed amount of one of the initiators set out below. Then, the temperature was brought to the value indicated in the table below in about 0.5 hour, and the reaction mixture allowed to react for 5 hours. The product was then stripped under vacuum at 110°C to remove unreacted styrene (residual styrene content of below 0.2 % by weight), and the polymer/polyol (20% polymer) was collected. The results were as follows:-

| Initiator | Amount (mmol/kg polyol + coupled polyol) | Temp. | Particle Size (µm) (micron) | Viscosity (mPa.s at 25°C) |
|---|---|---|---|---|
| Trigonox B | 70 | 110 | 1.1 | 5360 |
| Luperox 101 | 69.5 | 110 | 1.4 | 6970 |
| Luperox 575 | 110 | 80 | 1.3 | 6080 |
| Luperox 575 | 70 | 80 | 1.2 | 5890 |
| Luperox PA | 99.7 | 110 | 1.1 | 10550 |
| Lucidol 50 | 92.5 | 80 | 1.8 | 9810 |
| Trigonox C | 92.8 | 110 | 1.2 | 21660 |
| AIBN | 76 | 70 | >> 10 | unstable |

To achieve a useful comparison the reaction temperature in each case was selected in order to obtain an equivalent free radical concentration from each of the different initiators used.

From the results it can be seen that AIBN, which requires a lower temperature to provide the necessary free radical concentration, gives an unstable product with a very high particle size.

The peroxide catalysts all produce stable dispersions with a particle size approaching 1 micron thus demonstrating that the process of the invention is successful in preventing large-scale polymerisation of the styrene. The t-alkyl perioxides additionally produce usefully low viscosity dispersions.

### Example 3

C 36-3 (570g) and coupled polymer (30g) prepared as in Example 1 I were added to a clean reactor and then mixed and purged with nitrogen at 70°C. The temperature was then raised to 90°C and styrene (400g) and Luperox 575 (8.1g) added over a 2 hour period. The temperature was maintained at 90°C for a further 1.5 hours and then the residual styrene was removed by vacuum and a small flow of nitrogen. The polystyrene/polyol obtained had a 40% solids content of polystyrene of particle size of 1.52 µm (micron) (measured using a Malvern Mastersizer MS20) and a viscosity of 8280 mPa.s. Additional C36.3 was blended into the polymer/polyol dispersion to achieve a 20% solids content product; the viscosity of the resulting 20% polystyrene/polyol dispersion was 1880 mPa.s.

### Example 4

Three batches of experiments were carried out in which coupled polyols and polymer/polyols were prepared in accordance to the general procedure of Example 2, using the ingredients set out in Table 1 (Coupled polyols, using 0.09 % TEA, temperature varying from 20 to 50°C), and Table 2 (Polymer/polyols prepared at 20°C), with the exception that for experiments 1694/307, 1694/313 and 1694/299 the coupled polyols were prepared by the in-situ technique, therefore no base polyol was blended with the coupled polyol. The initiator used in the experiments was 2,4,4-trimethylpentyl-2-hydroperoxide (TMPH).

From Table 2 it is observed that using nearly the same final hydroxyl/isocyanate ratio to produce the coupled polyol, those coupled polyols produced by an initial ratio of nearly 2 result in a polymer/polyol having the lowest polymer particle size.

From the comparison experiments 1694/307, 1694/313 and 1694/299, it can be seen that from the in-situ preparation technique free polymerisation of styrene can occur and a higher polystyrene particle size in the polymer/polyol result than is achievable using the process of the present invention. Thus, the blend method is shown to be effective in improving the particle size of polystyrene polymer/polyols.

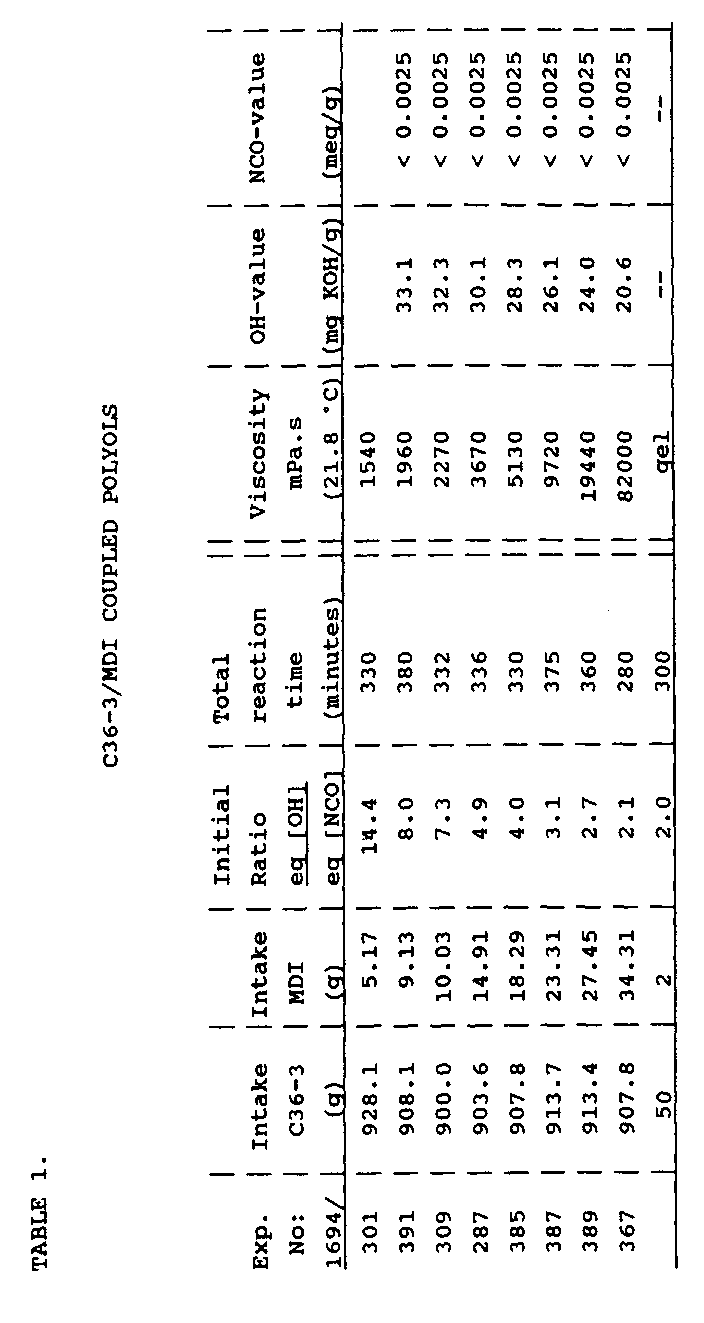

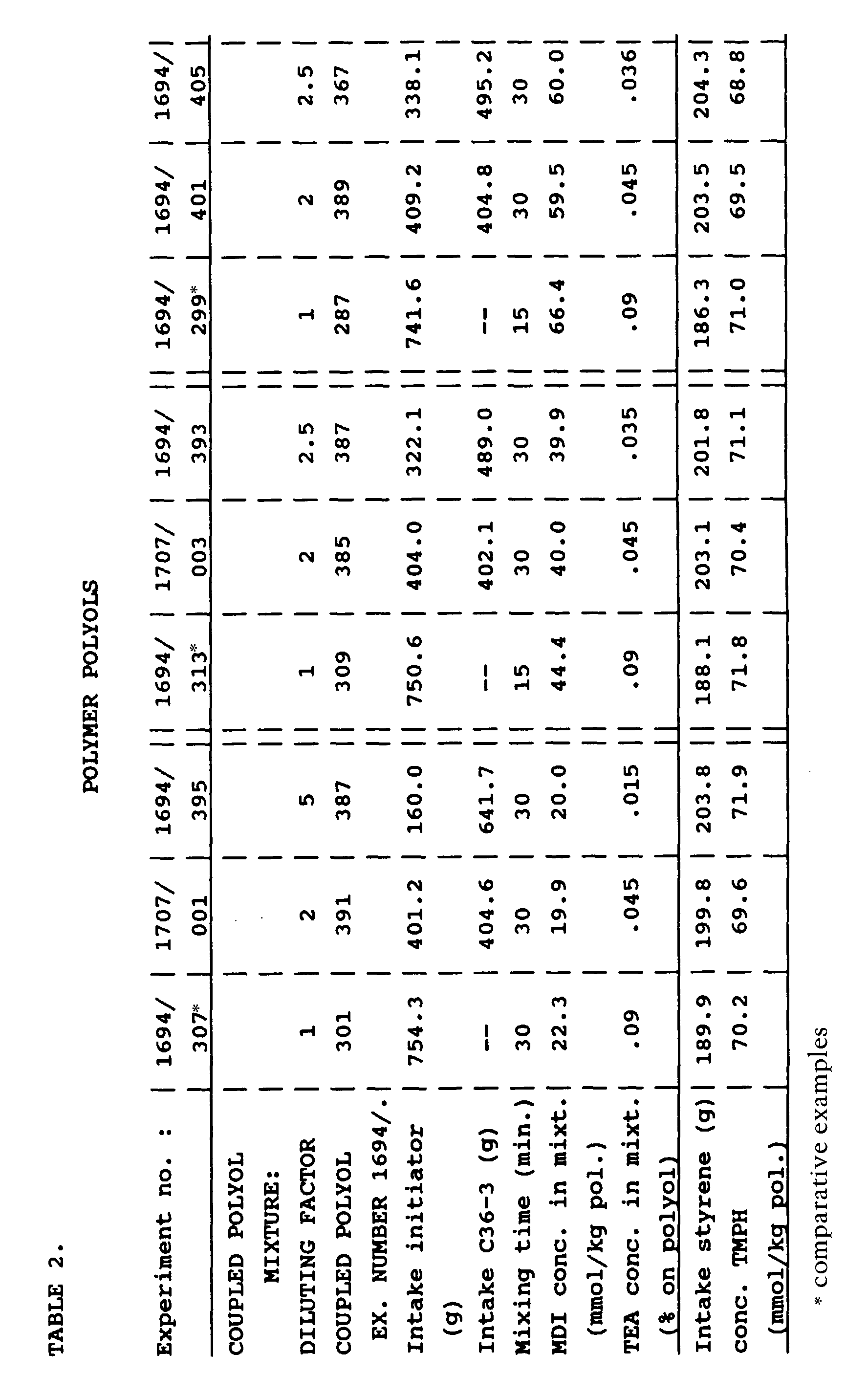

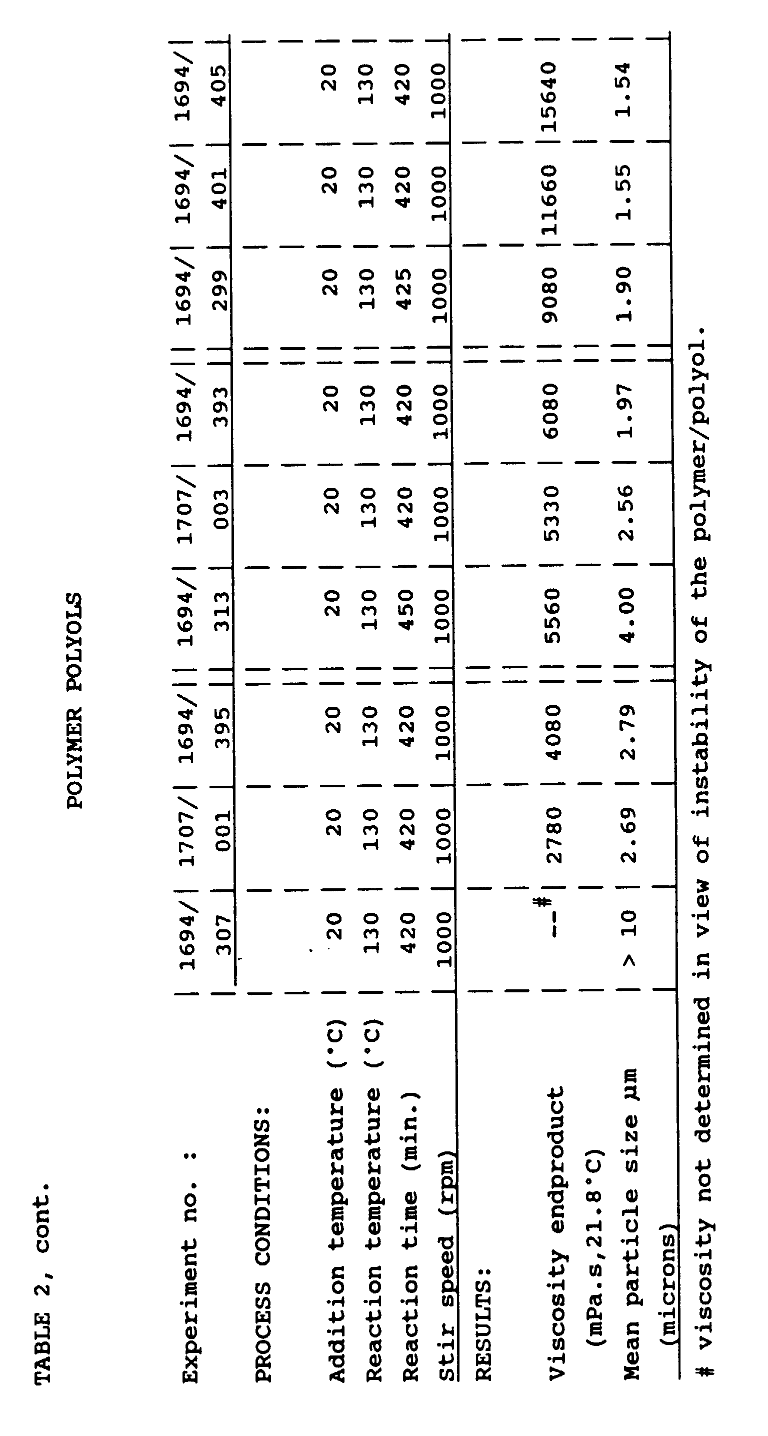

## Claims

1. A process for preparing a stable, polymer/polyol composition, which composition is formed by polymerising, in the presence of a free radical initiator, (1) from 10 to 50 weight percent of one or more ethylenically unsaturated monomers, dissolved or dispersed in (2) from 50 to 90 weight percent of a polyol mixture comprising (a) a base polyol (B) having a number average molecular weight of at least 500 and (b) a coupled polyol consisting essentially of the reaction product of a base polyol (A) having a functionality of at least 2 reacted with a polyisocyanate in such proportion that the ratio of hydroxyl groups to isocyanate groups is greater than 1, the coupled polyol being present in an amount sufficient to stabilise the resulting polymer/polyol, characterised in that (I) the monomer or monomer mixture comprises in excess of 80% by weight of styrene and/or structurally related vinyl aromatics and is polymerised in the presence of (II) a peroxide free radical initiator, dissolved or dispersed in (III) a polyol mixture prepared by first producing the coupled polyol separately, and then blending it with the base polyol (B).

2. A process as claimed in claim 1, wherein the monomer or monomer mixture comprises substantially 100% by weight of styrene.

3. A process as claimed in claim 1 or claim 2, wherein the peroxide initiator is selected from t-alkyl peroxyesters and peroxyethers.

4. A process as claimed in claim 3, wherein the peroxide initiator is t-amylperoxy-2-ethyl- hexanoate.

5. A process as claimed in any one of claims 1 to 4, wherein the coupled polyol is prepared by reacting one or more base polyols (A) with one or more organic polyisocyanates in a relative amount, expressed in the ratio of equivalents hydroxyl groups of both base polyols (A) and (B) over equivalents isocyanate groups, in the range of from 1 to 100, by first reacting said one or more base polyols (A) with said one or more organic polyisocyanates at an initial ratio of more than the ratio at which gelation occurs, whereafter sufficient base polyol (B) is added to achieve a final, predetermined ratio.

6. A process as claimed in claim 5, wherein the coupled polyol is prepared by reacting as base polyol (A) a trifunctional polyol, with a difunctional organic polyisocyanate in an initial ratio in the range of from 2.1 to 10.0.

7. A process as claimed in any one of claims 1 to 6, in which the polymer/polyol is blended with additional base polyol (B) subsequent to preparation.

8. A stable polymer/polyol composition whenever prepared by a process as claimed in any one of claims 1 to 7.

9. A process for the preparation of polyurethane and/or polyisocyanurate articles, casting systems, coating systems or adhesives, which uses a polymer/polyol composition prepared according to any one of claims 1 to 7.

10. Polyurethane and/or polyisocyanurate articles, casting systems, coating systems or adhesives whenever prepared by a process as claimed in claim 9.

11. The use of a stable polymer/polyol composition prepared by a process as claimed in any one of claims 1 to 7, in the preparation of polyurethane and/or polyisocyanurate articles, casting systems, coating systems or adhesives.

## Patentansprüche

1. Verfahren zur Herstellung einer stabilen Polymer-Polyol-zusammensetzung, gebildet durch Polymerisation von (1) 10 bis 50 Gewichtsprozent eines oder mehrerer ethylenisch ungesättigter Monomere, die in (2) 50 bis 90 Gewichtsprozent einer Polyolmischung, enthaltend (a) ein Basispolyol (B) mit einem zahlenmittleren Molekulargewicht von mindestens 500 und (b) ein gekuppeltes Polyol, das im wesentlichen aus dem Produkt der Umsetzung eines Basispolyols (A) mit einer Funktionalität von mindestens 2 mit einem Polyisocyanat in solchen Anteilen, daß das Verhältnis von Hydroxylgruppen zu Isocyanatgruppen größer als 1 ist, besteht, gelöst oder dispergiert sind, in Gegenwart eines radikalischen Initiators, wobei das gekuppelte Polyol in einer zur Stabilisierung des erhaltenen Polymer-Polyols ausreichenden Menge vorliegt, dadurch gekennzeichnet, daß (I) das Monomer bzw. das Monomerengemisch über 80 Gew.-% Styrol und/oder strukturverwandte Vinylaromaten enthält und in Gegenwart von (II) einem peroxidischen radikalischen Initiator polymerisiert wird und (III) in einer durch getrennte Herstellung des gekuppelten Polyols und anschließendes Mischen mit dem Basispolyol (B) hergestellten Polyolmischung gelöst oder dispergiert wird.

2. Verfahren nach Anspruch 1, bei dem man ein Monomer bzw. Monomerengemisch einsetzt, das im wesentlichen 100 Gew.-% Styrol enthält.

3. Verfahren nach Anspruch 1 oder Anspruch 2, bei dem man den peroxidischen Initiator unter t-Alkylperoxyestern und Peroxyethern auswählt.

4. Verfahren nach Anspruch 3, bei dem man als peroxidischen Initiator t-Amylperoxy-2-ethylhexanoat einsetzt.

5. Verfahren nach einem der Ansprüche 1 bis 4, bei dem man das gekuppelte Polyol durch Umsetzung eines oder mehrerer Basispolyole (A) mit einem oder mehreren organischen Polyisocyanaten in einem Mengenverhältnis, ausgedrückt als das Verhältnis von Hydroxylgruppenäquivalenten der beiden Basispolyole (A) und (B) zu Isocyanatgruppenäquivalenten, im Bereich von 1 bis 100 herstellt, wobei man zunächst das eine oder die mehreren Basispolyole (A) mit dem einen oder den mehreren organischen Polyisocyanaten in einem Anfangsverhältnis, das größer als das Verhältnis ist, bei dem Gelierung auftritt, umsetzt und danach zur Erreichung eines vorbestimmten Endverhältnisses ausreichendes Basispolyol (B) zusetzt.

6. Verfahren nach Anspruch 5, bei dem man das gekuppelte Polyol durch Umsetzung eines trifunktionellen Polyols als Basispolyol (A) mit einem difunktionellen organischen Polyisocyanat in einem Anfangsverhältnis im Bereich von 2,1 bis 10,0 herstellt.

7. Verfahren nach einem der Ansprüche 1 bis 6, bei dem man das Polymer-Polyol nach der Herstellung mit zusätzlichem Basispolyol (B) mischt.

8. Stabile Polymer-Polyol-Zusammensetzung, hergestellt nach einem Verfahren gemäß einem der Ansprüche 1 bis 7.

9. Verfahren zur Herstellung von Polyurethan- und/oder Polyisocyanurat-Gegenständen, Vergußsystemen, Beschichtungssystemen oder Klebstoffen, bei dem man eine gemäß einem der Ansprüche 1 bis 7 hergestellte Polymer-Polyol-Zusammensetzung einsetzt.

10. Polyurethan- und/oder Polyisocyanurat-Gegen-stände, Vergußsysteme, Beschichtungssysteme oder Klebstoffe, hergestellt nach einem Verfahren gemäß Anspruch 9.

11. Verwendung einer nach einem Verfahren gemäß einem der Ansprüche 1 bis 7 hergestellten Polymer-Polyol-Zusammensetzung bei der Herstellung von Polyurethan- und/oder Polyisocyanurat-Gegenständen, Vergußsystemen, Beschichtungssystemen oder Klebstoffen.

## Revendications

1. Procédé de préparation d'une composition de polymère/polyol stable, laquelle composition est formée par la polymérisation, en présence d'un amorceur de radicaux libres, (1) de 10 à 50% en poids d'un ou plusieurs monomères à insaturation éthylénique, dissous ou dispersés dans (2) de 50 à 90% en poids d'un mélange d'un polyol comprenant (a) un polyol de base (B) possédant un poids moléculaire moyen en nombre d'au moins 500, et (b) un polyol couplé essentiellement constitué du produit de la réaction d'un polyol de base (A) possédant une fonctionnalité d'au moins 2, ayant réagi avec un polyisocyanate en une proportion telle que le rapport des radicaux hydroxyle aux radicaux isocyanate soit supérieur à 1, le polyol couplé étant présent en une quantité qui suffit à stabiliser le polymère/polyol résultant, caractérisé en ce que (I) le monomère ou le mélange de monomères est constitué de plus de 80% en poids de styrène et/ou d'un composé vinylaromatique structuralement apparenté et est polymérisé en présence de (II) un amorceur de radicaux libres du type peroxyde, dissous ou dispersé dans (III), un mélange de polyols préparé en produisant d'abord le polyol couplé séparément et en le mélangeant ensuite au polyol de base (B).

2. Procédé suivant la revendication 1, caractérisé en ce que le monomère ou le mélange de monomères est essentiellement constitué de 100% en poids de styrène.

3. Procédé suivant la revendication 1 ou la revendication 2, caractérisé en ce que l'on choisit l'amorceur du type peroxyde parmi les t-alkylperoxyesters et peroxyéthers.

4. Procédé suivant la revendication 3, caractérisé en ce que l'amorceur du type peroxyde est le peroxy-2-éthylhexanoate de t-amyle.

5. Procédé suivant l'une quelconque des revendications 1 à 4, caractérisé en ce que l'on prépare le polyol couplé par réaction d'un ou plusieurs polyols de base (A) avec un ou plusieurs polyisocyanates organiques, en une proportion relative, exprimée par le rapport d'équivalents de radicaux hydroxyle des deux polyols de base (A) et (B) aux équivalents de radicaux isocyanate, qui se situe dans la plage de 1 à 100, en faisant d'abord réagir lesdits un ou plusieurs polyols de base (A) avec lesdits un ou plusieurs polyisocyanates organiques dans un rapport initial supérieur au rapport auquel une gélification se produit, puis on ajoute suffisamment de polyol de base (B) pour atteindre un rapport final prédéterminé.

6. Procédé suivant la revendication 5, caractérisé en ce que l'on prépare le polyol couplé en faisant réagir, à titre de polyol de base (A), un polyol trifonctionnel, avec un polyisocyanate organique difonctionnel, dans un rapport initial qui varie de 2,1 à 10,0.

7. Procédé suivant l'une quelconque des revendications 1 à 6, caractérisé en ce que l'on mélange le polymère/polyol à du polyol de base (B) supplémentaire après la préparation.

8. Composition de polymère/polyol stable, lorsqu'elle est préparée par la mise en oeuvre du procédé suivant l'une quelconque des revendications 1 à 7.

9. Procédé de préparation d'adhésifs, de systèmes de revêtement, de systèmes de moulage, ou d'articles en polyuréthanne et/ou en polyisocyanurate, qui utilise une composition de polymère/polyol préparée suivant l'une quelconque des revendications 1 à 7.

10. Articles en polyuréthanne et/ou en polyisocyanurate, systèmes de moulage, systèmes de revêtement, ou adhésifs, lorsqu'ils sont obtenus par la mise en oeuvre du procédé suivant la revendication 9.

11. Utilisation d'une composition de polymère/polyol stable, telle que préparée par la mise en oeuvre d'un procédé suivant l'une quelconque des revendications 1 à 7, en vue de la préparation d'adhésifs, de systèmes de revêtement, de systèmes de moulage, ou d'articles en polyuréthanne et/ou en polyisocyanurate.
